# EUROPÄISCHE PATENTANMELDUNG

(11) **EP 4 113 764 A1**
(43) Veröffentlichungstag der Anmeldung: **04.01.2023**
(21) Anmeldenummer: 22181141.7
(22) Anmeldetag: 27.06.2022
(51) Int. Cl.: H02G 3/10, H02G 3/00

(54) **VORRICHTUNG ZUR MONTAGEUNTERSTUETZUNG**

(30) Priorität: 29.06.2021 DE 102021116738
(71) Anmelder: Aumueller, Goetz Joachim, 67117 Limburgerhof (DE)
(72) Erfinder: Aumueller, Goetz Joachim, 67117 Limburgerhof (DE)
(74) Vertreter: Busch, Tobias

(57) **Zusammenfassung**

Die Erfindung betrifft ein Aufputz-Gehäuse (1) zur Integration elektrischer Komponenten. Das Aufputz-Gehäuse (1) umfasst eine Abdeckung (2), einen Rahmen (3) und eine Montageplatte (4). Das Aufputz-Gehäuse (1) weist eine Vorrichtung zur Montageunterstützung (5) auf.

## Beschreibung

Die Erfindung betrifft ein Aufputz-Gehäuse zur Integration elektrischer Verbindungen und Komponenten mit einer Abdeckung, einem Rahmen und einer Montageplatte.

Ein Aufputz-Gehäuse ist meist ein thermoplastisches Gebilde zur Vorwandmontage. Dabei wird ein Grundkörper des thermoplastischen Gebildes in Form einer Wanne oder einer Montageplatte vor einer Wand fest fixiert. In diesen Grundkörper können elektrische Komponenten stetig angeordnet und mit einer funktionalen Abdeckung dauerhaft verschlossen werden. Meist besteht die Abdeckung auch aus dem gleichen thermoplastischen Kunststoff und weist Öffnungen für die bekannten, charakteristischen Steckverbinder auf.

Im Stand der Technik bekannt sind Aufputz-Gehäuse mit integrierten elektrischen Komponenten als Steckdose. Eine Steckdose dient als elektrischer Steckverbinder zwischen Leitungen. Sie wird entweder fest an einer Wand als Aufputz-Steckdose oder versenkt als Unterputz-Steckdose installiert. Alternativ kann eine Steckdose auch als Teil einer mobilen Leitungskupplung, wie beispielsweise Tisch- oder Mehrfachsteckdosen, oder Verlängerungen, die für den mobilen Einsatz gedacht sind, ausgeführt sein.

Eine Steckdose wird meist für die Stromversorgung verwendet, umgangssprachlich ausschließlich für diese Anwendung. Aber auch Telefon- und Datenübertragungsdosen sind Steckdosen. Üblicherweise werden über Steckdosen Geräte mit Einphasen- von 220 bis 230 Volt oder Dreiphasenwechselstrom bis 400 Volt versorgt; es gibt aber auch genormte Steckdosen für Gleichstrom. Die Steckverbinder sind für gewöhnlich genormt, aber aus historischen Gründen nicht immer international.

Solche Aufputz-Gehäuse mit elektrischen Komponenten sind schon lange bekannt. So beschreibt die DE 928 412 ein Aufputz-Installationsgerät, das als Schutzkontaktsteckdose ausgeführt ist. Dabei umgibt eine gummielastische Ummantelung eine rund geformte Aufputz-Steckdose.

Für die Montage wird das Aufputz-Gehäuse und gegebenenfalls die elektrischen Komponenten in seine Einzelteile auseinandergeschraubt. Zur Montage wird die Montageplatte oder die Montagewanne vor der Wand positioniert und mithilfe einer Wasserwaage bzw. alternativen Hilfsmittel ausgerichtet, um die exakte Position der Verschraubungsbohrungen anzuzeichnen. In Abhängigkeit des Untergrundes wird mit geeigneten Bohrwerkzeugen die angezeichneten Bohrlöcher erstellt, nachdem die Montageplatte bzw. die Montagewanne von der Wand genommen wurde. Es folgt das Säubern der Bohrlöcher und das Einbringen von Montagehilfsmittel, wie z. B. Dübel. Anschließend wird die Montageplatte bzw. die Montagewanne mithilfe von Befestigungsmittel, wie z. B. Schrauben, unter Zuhilfenahme von Ausrichtungshilfsmitteln fest fixiert.

Nach dem Anbringen der Montagewanne erfolgt in der Regel die Kabeleinführung und Verdrahtung der elektrischen Komponenten. Die elektrischen Komponenten werden in der Montagewanne angebracht und von der Abdeckung verschlossen.

Die DE 10 2016 104 460 A1 beschreibt ein elektrisches Installationsgerät, bei dem die elektrischen Komponenten nach der Wandmontage der Montagewanne mit einer Schnappverbindung eingeklipst werden können.

Montageerleichterungen für die elektrischen Komponenten gibt es in ganz unterschiedlichen Ausführungen. Die Wandmontage des Gehäuses erfolgt jedoch immer noch in vielen kleinen Arbeitsschritten. Umständlich hierbei ist besonders das lose Positionieren bei gleichzeitigem Ausrichten und Anzeichnen der Bohrlöcher. Üblicherweise wird die Montage von einer Person ausgeführt, die für die sachgerechte Ausführung meist zu wenig "freie Hände" zur Verfügung hat. Darüber hinaus wirkt sich das Abnehmen der Montagewanne zum Bohren und das erneute Ausrichten und gleichzeitiges Fixieren ungünstig auf die Montagezeit aus.

Aufgabe der Erfindung ist es, ein Aufputz-Gehäuse so zu gestalten, dass es möglichst einfach und mit wenigen Arbeitsschritten vor einer Wand montiert werden kann. Das Aufputz-Gehäuse soll so gestaltet sein, dass es möglichst nur von einer Person und dabei zeiteffizient montiert werden kann.

Diese Aufgabe wird erfindungsgemäß durch ein Aufputz-Gehäuse zur Integration elektrischer Komponenten sowie eine Verwendung gemäß dem nebengeordneten Hauptanspruch gelöst. Bevorzugte Varianten sind den Unteransprüchen, der Beschreibung und den Beispielen zu entnehmen.

Erfindungsgemäß weist das Aufputz-Gehäuse eine Vorrichtung zur Montageunterstützung auf. Ein Aufputz-Gehäuse im Sinne der Erfindung schließt jedes Gehäuse zur Integration elektrischer Komponenten zur Installation vor einer Wand ein, wie beispielsweise Steckdosen, Netzwerkdosen, Abzweigdosen, Sicherungsverteiler. Diese Aufputz-Gehäuse können sowohl aus Kunststoff oder Metall gefertigt sein.

Gemäß der Erfindung weist die Vorrichtung zur Montageunterstützung eine Haftmasse zum stoffschlüssigen Fügen auf. Die Haftmasse ist an der Wandseite der Montageplatte angeordnet und mit einer abziehbaren Abdeckung versehen.

Eine abziehbare Abdeckung der Haftmasse umfasst eine Lage aus einem papierähnlichen Stoff und einer Schicht, die ein Abziehen von der Kleberschicht gewährleistet. Die Papierstreifen, auch Trennpapiere genannt, zeichnen sich durch eine meist steife Haptik aus, die auf ihrem Flächengewicht von größer als 50 g/m² beruhen. Ein Trennpapier zeichnet sich durch eine gute Trennwirkung gegen eine Haftmasse aus. Um diese Eigenschaften zu gewährleisten, weist ein Trennpapier eine sogenannte Releasebeschichtung auf, welche z.B. auf einem Polysiloxan basieren kann.

Mithilfe der Vorrichtung zur Montageunterstützung, insbesondere der Haftmasse, kann die Montageplatte eines Aufputz-Gehäuses in einem einzigen Arbeitsgang und äußerst einfach an eine Wand angebracht werden. Dabei ermöglicht die Haftmasse ein ungefähres Fixieren an der gewünschten Position und lässt gleichzeitig das Ausrichten des Aufputz-Gehäuses zu, ohne dass dabei das Eigengewicht des Aufputz-Gehäuses in Position gehalten werden muss. Idealerweise verbleibt das Aufputz-Gehäuse, aufgrund des Anordnungsortes und der besonderen Konsistenz der Haftmasse, in der dann mit einem Hilfsmittel ausgerichteten Position.

Gerade das "Nicht-mehr-heben-müssen" während des Ausrichtens des Aufputz-Gehäuses realisiert die schnelle und einfache Montage eines Aufputz-Gehäuses von nur einer Person. Die erfindungsgemäße Ausführung des Aufputz-Gehäuses stellt eine erhebliche Erleichterung bei der Vorwandmontage einer Steckdose dar.

Die Vorrichtung zur Montageunterstützung umfasst mindestens die zentral an der Montageplatte angeordnete Haftmasse in Kombination mit verstärkten sowie besonders ausgeformten, als auch besonders angeordneten Bohrhilfen der Montageplatte.

In einer besonders vorteilhaften Variante der Erfindung umfasst die Vorrichtung zur Montageunterstützung verstärkte Bohrhilfen. Nach dem Ausrichten der Montageplatte muss die Montageplatte nicht mehr zum Bohren abgenommen werden. Die installierende Person kann direkt und ohne Anzeichnen der Bohrschablone durch die verstärkten Bohrhilfen hindurch bohren. Gegebenenfalls können die Bohrhilfen mit einem Sauger vom Bohrmehl befreit werden. Das Einbringen der Montagehilfsmittel in Form eines Dübels kann direkt durch die Bohrhilfen erfolgen. Hierbei können auch Unterlagscheiben zur Vergrößerung der Auflagefläche der Schraube Verwendung finden. Das Fixieren mit einem Befestigungsmittel findet ebenfalls durch die Bohrhilfen, vorzugsweise mit geeignet geformten Schrauben statt und rundet die Montage des Aufputz-Gehäuses in einem flüssigen Arbeitsschritt ab.

Vorzugsweise sind die Bohrhilfen in Form von metallischen Hülsen oder in Form von besonders hartem Hochleistungskunststoff verstärkt. Die Verstärkungen der Bohrhilfen können bevorzugt bereits beim Spritzgießen des thermoplastischen Kunststoffs zur Montageplatte eingegossen werden. Darüber hinaus weist eine solche Bohrhilfe vorzugsweise eine Schulter zur Ausbildung einer kraftschlüssigen Verbindung mit einem Befestigungsmittel auf.

In einer bevorzugten Ausführungsvariante der Erfindung ist die Haftmasse mittig zwischen zwei gegenüberliegenden Wänden des Rahmens angeordnet. Im Falle einer quadratischen Ausführung des Aufputz-Gehäuses ist die Haftmasse somit zentral, also mittig zwischen jeweils zwei gegenüberliegenden Wänden des Rahmens, angeordnet. Bei einer rechteckigen Ausführung des Aufputz-Gehäuses ist die Haftmasse vorzugsweise mittig zwischen den beiden langen Seiten der gegenüberliegenden Wände oder zwischen den beiden kurzen Seiten der gegenüberliegenden Wände angeordnet. In dieser Ausführungsvariante ermöglicht die Haftmasse besonders eine horizontale oder vertikale Ausrichtung im bereits haftenden Zustand. In einer ganz besonders bevorzugten Variante der Erfindung ist die Haftmasse mittig zwischen den beiden langen und mittig zwischen den beiden kurzen Seiten der gegenüberliegenden Wände angeordnet. In dieser Variante kann das Aufputz-Gehäuse sehr leicht in ihrem Drehwinkeln im bereits haftenden Zustand ausgerichtet werden.

In einer alternativen Ausführung der Erfindung ist die Haftmasse auf verschiedene Anordnungspunkte der Vorrichtung zur Montageunterstützung verteilt. Dazu können zwei, vorzugsweise drei, insbesondere vier Anordnungspunkte der Haftmasse, in Abhängigkeit der Abmaße des Aufputz-Gehäuses, auf der Montageplatte ausgeführt sein.

Idealerweise beträgt die Klebekraft der Haftmasse mehr als 12 N/25mm, vorzugsweise mehr als 15 N/25mm, insbesondere mehr als 18 N/25mm.

Aufgrund der besonderen Klebekraft in Kombination mit der Elastizität der Haftmasse haftet die Montageplatte nach dem Andrücken sicher an der Wand und erlaubt darüber hinaus die Bewegung zur Ausrichtung in einem ausreichenden Maß.

Idealerweise weist die Montageplatte zusätzlich Steckhilfen für das Fixieren des Rahmens an der Montageplatte auf. Auf diese elegante Weise kann der Rahmen nach dem Anbringen der Montageplatte an der Wand mithilfe von Einclipselementen an den Steckhilfen fest und sicher fixiert werden.

Gemäß der Erfindung weist die Vorrichtung zur Montageunterstützung Bohrhilfen auf. Im einfachsten Fall sind die Bohrhilfen kreisrunde Löcher in der Montageplatte, die zusätzlich eine zylinderförmige Führung aufweisen können. Dabei sind die Bohrhilfen, insbesondere die zylindrische Führung, verstärkt ausgebildet, um der mechanischen Belastung durch das Bohren standhalten zu können.

In einer alternativen Variante der Erfindung können die Bohrhilfen auch an Laschen angeordnet sein, die von der Montageplatte wegstehen und über die Abmaße des Rahmens hinausragen. Die Laschen können auch mit Hilfe einer Steckverbindung an das Gehäuse angeklipst, eingeschoben, etc. werden.

Die Haftmasse verfügt aufgrund der hervorragenden Klebekraft schon über ein enormes Fixierungspotential. Zusätzlich sind in der Montageplatte mindestens zwei Bohrhilfen vorgesehen, die diagonal gegenüberliegend und mit Abstand zu den eventuell ausgebildeten Steckhilfen bzw. Haltehilfen für die elektrischen Komponenten angeordnet sind. In Abhängigkeit der Abmaße des Aufputz-Gehäuses kann die Montageplatte mehr als vier, vorzugsweise mehr als sechs, insbesondere mehr als acht Bohrhilfen aufweisen.

In einer alternativen Ausgestaltung der Erfindung ist die Montageplatte mit dem Rahmen einstückig als Montagewanne ausgeführt. Dabei sind die Bohrhilfen in der Montagewanne so vorteilhaft positioniert, dass das Rahmenteil der Montagewanne bei dem Arbeitsschritt Bohren nicht hinderlich wirkt.

In einer bevorzugten Variante der Erfindung sind die Montageplatte und der Rahmen des Aufputz-Gehäuses getrennt ausgebildet, wodurch die Montage mithilfe der Vorrichtung zur Montageunterstützung besonders effizient ausgeführt werden kann.

Um zur Montage den Rahmen und die Montageplatte leicht fügen und eine stabile Verbindung ausbilden zu können, weist die Montageplatte Vorsprünge in Form von sogenannten Verbindungsohren auf, die in einem rechten Winkel von der Montageplatte dem Rahmen entgegenstehen. Die Vorsprünge bzw. Ohren ermöglichen ein bündiges Übergleiten des Rahmens über die Ohren und weisen Elemente zur Arretierung, insbesondere Clips, auf. In einer alternativen Ausführung kann der Rahmen auch mit Fixierungshilfsmittel wie Schrauben an der Montageplatte befestigt werden.

In einer alternativen Variante der Erfindung weist der Rahmen Ecken in Form von Dreiecken auf, die in den Ecken des Rahmens zum bündigen Anschluss an die Montageplatte angeordnet sind. Vorteilhafterweise sind in diesen Ecken die Bohrhilfen der Vorrichtung zur Montageunterstützung integriert. Die zu errichtenden Bohrlöcher können durch die haftende Montageplatte und dem clipsbaren Anschluss des Rahmens mit integrierten Bohrhilfen effizient angerissen, errichtet und mit den entsprechenden Befestigungsmitteln fixiert werden.

In einer weiteren Variante der Erfindung sind die Bohrhilfen in Ecken der Montageplatte angeordnet, die mittels Gelenke klappbar ausgebildet sind und zum Errichten der Bohrlöcher sowie zum Einbringen der Montagehilfsmittel zur Seite geklappt werden können.

Zur wasserdichten Ausführung des Aufputz-Gehäuses nach Schutzklasse IP66/67 ist zwischen Montageplatte und Rahmen, sowie zwischen Rahmen und Abdeckung vorzugsweise jeweils eine Dichtung angeordnet.

In einer bevorzugten Variante der Erfindung ist die Kabeleinführung in Form eines steckbaren Rahmenstücks ausgeführt und vorzugsweise mit einer Dichtung als Ausführung nach Schutzklasse IP 66/IP 67 versehen. Dabei kann die Kabeleinführung als trapezförmiges Rahmenstück ausgeführt sein, dessen zulaufenden Seiten vorzugsweise in Richtung Abdeckung ausgerichtet sind.

Gemäß der Erfindung wird die Vorrichtung zur Montageunterstützung mit einer Haftmasse und verstärkten Bohrhilfen zur Montage eines Aufputz-Gehäuses verwendet. Neben den bekannten Erfindungen zur angenehmen Installation elektrischer Komponenten innerhalb von Gehäusen, wird mit dieser Erfindung zum ersten Mal die Montage eines Aufputz-Gehäuses in einem erheblichen Maße erleichtert. Die Montage und die korrekte Ausrichtung eines Aufputz-Gehäuses kann mit der Vorrichtung zur Montageunterstützung zeiteffizient und mit einer minimalen Anzahl an nötigen Arbeitsschritten ausgeführt werden.

Bisher sind bereits schmale und kleine Kabelkanäle bekannt, die eine Klebschicht zum Fixieren auf Böden aufweisen. Diese stellen aber keine Vorrichtung zur Montageunterstützung im Sinne der Erfindung dar, da sie nicht mit Befestigungsmittel fixiert werden und nur für eine meist vorübergehende Dauer auf den Böden fixiert werden.

In einer alternativen Variante der Erfindung kann das Aufputz-Gehäuse als Aufputz-Kabelkanal ausgeführt sein und zur Montage eine Vorrichtung zur Montageunterstützung aufweisen. Im Gegensatz zu den genannten kleinen Kabelkanälen erfolgt die dauerhafte Fixierung mithilfe von Befestigungsmitteln vor einer Wand. Hierbei wird die Montage besonders vorteilhaft durch die erfindungsgemäße Vorrichtung zur Montageunterstützung, insbesondere der Haftmasse, erleichtert.

In einer bevorzugten Variante der Erfindung weist der Kabelkanal, dessen Montageplatte und Rahmen einstückig in Form eines U-Profils ausgeführt sind, mindestens ein Gelenk vorzugsweise in der Mitte der Montageplatte auf. Mithilfe der Haftmasse wird der Kabelkanal angebracht und ausgerichtet. Nach dem Anzeichnen der Bohrlöcher durch die integrierten Bohrhilfen kann die jeweils obere oder untere Hälfte zum Fertigen der Bohrlöcher und Einbringen der Montagehilfsmittel zur Seite geklappt werden.

In einer alternativen Ausgestaltung der Erfindung ist das Aufputz-Gehäuse zur Montage in einer Raumecke ausgebildet. Dazu weist die Montageplatte drei Flächen auf, die jeweils um 45 ° zueinander geneigt sind, auf. An den zwei Seiten der Montageplatte mit Wandkontakt ist eine Haftmasse als Teil der Vorrichtung zur Montageunterstützung angebracht. Diese besonders elegante Ausgestaltung der Vorrichtung zur Montageunterstützung ermöglicht eine besonders effiziente und angenehme Montage in Raumecken.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: ein Aufputz-Gehäuse in einer Explosionsansicht,
- Fig. 2: ein Aufputz-Gehäuse einer Doppelsteckdose in einer Explosionsansicht,
- Fig. 3: ein Aufputz-Gehäuse eines Kabelkanals im aufgeklappten Zustand,
- Fig. 4: ein Aufputz-Gehäuse mit klappbaren Ecken der Montageplatte in einer Explosionsansicht.

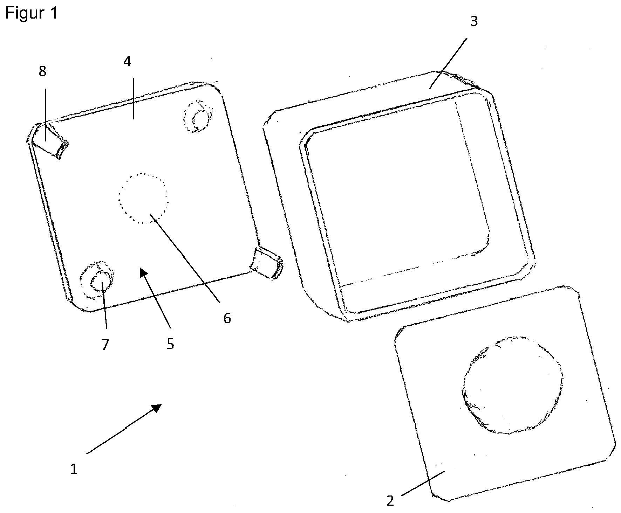

In Fig. 1 ist das Aufputz-Gehäuse 1 mit der Abdeckung 2, dem Rahmen 3 und der Montageplatte 4 in einer Explosionsansicht dargestellt. Die Montageplatte 4 weist eine Vorrichtung zur Montageunterstützung 5 auf. Die Vorrichtung zur Montageunterstützung 5 umfasst die verstärkten Bohrhilfen 7 und die mittig, auf der wandzugewandten Seite angeordnete Haftmasse 6. Zusätzlich weist die Montageplatte 4 Steckhilfen 8 für das Fixieren des Rahmens 3 an der Montageplatte 4 auf. Die Steckhilfen 8 verfügen in einer vorteilhaften Variante der Erfindung über Einclipselemente zum dauerhaften Fixieren des Rahmens 3 an der Montageplatte 4.

Die Haftmasse 6 ist jeweils mittig zwischen zwei Wänden des Rahmens 3 angeordnet. Die Haftmasse 6 ermöglicht ein ungefähres Fixieren der Montageplatte 4 an einer gewünschten Wandposition bzw. Montageposition und lässt gleichzeitig das Ausrichten der Montageplatte 4 zu, ohne dass dabei das Eigengewicht in Position gehalten werden muss. Idealerweise verbleibt die Montageplatte 4, aufgrund des Anordnungsortes und der besonderen Konsistenz der Haftmasse 6, in der dann mit einem Hilfsmittel ausgerichteten Position.

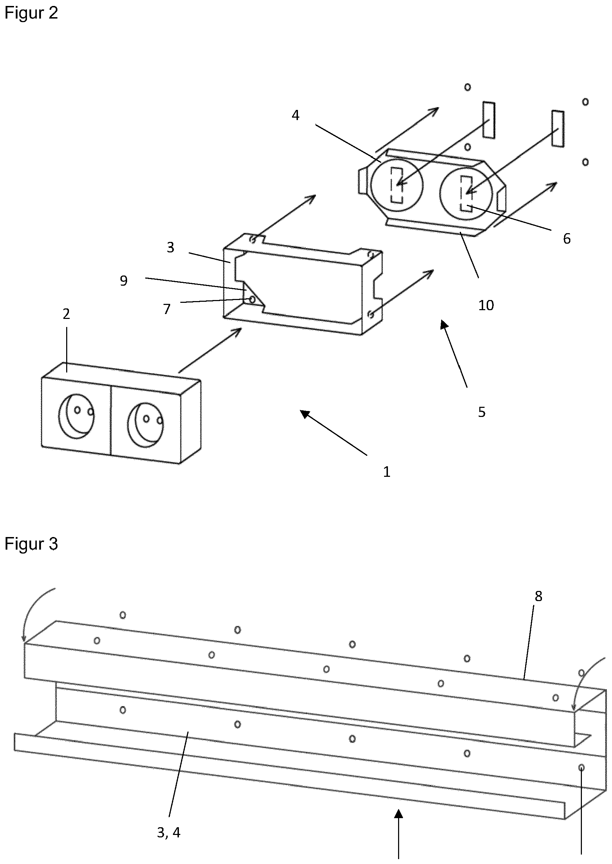

In Fig. 2 ist ein Aufputz-Gehäuse 1 in Form einer Doppelsteckdose ausgeführt und in einer Explosionsansicht dargestellt. Die Doppelsteckdose umfasst eine Abdeckung 2, einen Rahmen 3 und eine Montageplatte 4. Die Vorrichtung zur Montageunterstützung 5 weist dabei zwei Anordnungen einer Haftmasse 6 auf der wandzugewandten Seite der Montageplatte 4 auf. Des Weiteren umfasst die Montageplatte an jeder Seite einen Vorsprung 10, der in einem rechten Winkel zur Montageplatte 4 ausgerichtet ist und zur Arretierung des Rahmens 3 dient.

In dieser Ausführungsvariante des Aufputz-Gehäuses 1 umfasst die Vorrichtung zur Montageunterstützung Ecken 9, die als Dreiecke in jedem Eck des Rahmens 3 angeordnet sind. Die Bohrhilfen 7 der Vorrichtung zur Montageunterstützung 5 sind in die Ecken 9 integriert. Bei der Installation der Doppelsteckdose wird zunächst die Montageplatte 4 mithilfe der Haftmasse 6 vor einer Wand angebracht und anschließend mit einem Hilfsmittel in eine ausgerichtete Position überführt. Der Rahmen 3 wird zum Anzeichnen der Bohrlöcher durch die Bohrhilfen 7 hindurch auf der Montageplatte 4 mithilfe der Vorsprünge 10 arretiert und zum Bohren wieder abgenommen. Anschließend erfolgt die restliche Montage des Rahmens 3, der Abdeckung 2 und nicht dargestellten elektrischen Komponenten mit Montagehilfsmittel und Befestigungsmittel.

In Fig. 3 ist ein Aufputz-Gehäuse in Form eines Kabelkanals im aufgeklappten Zustand dargestellt. Die Vorrichtung zur Montageunterstützung 5 umfasst ein Gelenk 8, wodurch der U-förmige Kabelkanal zur Anbringung der Bohrlöcher jeweils herunter oder hoch geklappt werden kann. In dieser Variante des Aufputz-Gehäuses ist der Rahmen 3 und die Montageplatte 4 einstückig ausgebildet.

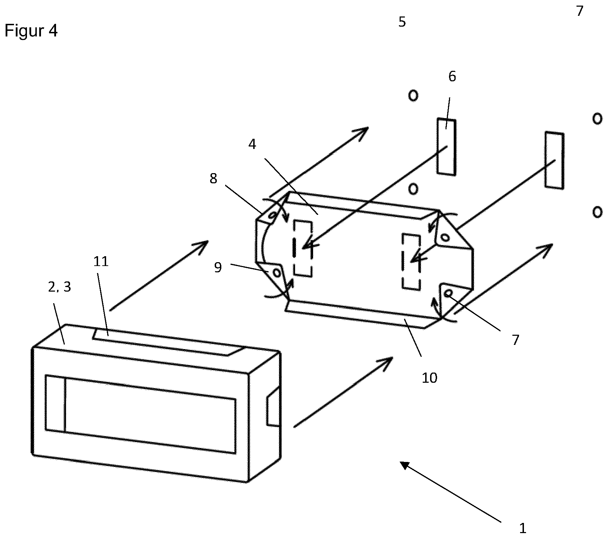

In Fig. 4 ist ein Aufputz-Gehäuse 1 in einer Explosionsansicht dargestellt. In dieser Variante sind der Rahmen 3 und die Abdeckung 2 einstückig ausgeführt. Die Montageplatte 4 weist zwei Anordnungen der Haftmasse 6 auf und vier mittels Gelenke 8 klappbare Ecken 9, in denen die Bohrhilfen 7 integriert sind. Die Vorsprünge 10 dienen zum Arretieren des Rahmens 3 auf der Montageplatte 4. Der Rahmen 3 weist eine steckbare, trapezförmige Kabeleinführung 11 auf.

## Patentansprüche

1. Aufputz-Gehäuse (1) zur Integration elektrischer Verbindungen und Komponenten mit einer Abdeckung (2), einem Rahmen (3) und einer Montageplatte (4), **dadurch gekennzeichnet, dass** das Aufputz-Gehäuse (1) eine Vorrichtung zur Montageunterstützung (5) aufweist.

2. Aufputz-Gehäuse nach Anspruch 1, **dadurch gekennzeichnet, dass** die Vorrichtung zur Montageunterstützung (5) eine Haftmasse (6) zum stoffschlüssigen Fügen aufweist, wobei die Haftmasse (6) an der Wandseite der Montageplatte (4) angeordnet ist und mit einer abziehbaren Abdeckung versehen ist.

3. Aufputz-Gehäuse nach Anspruch 2, **dadurch gekennzeichnet, dass** die Haftmasse (6) mittig zwischen zwei gegenüberliegenden Wänden des Rahmens (3) angeordnet ist.

4. Aufputz-Gehäuse nach Anspruch 2 oder 3, **dadurch gekennzeichnet, dass** die Klebekraft der Haftmasse (6) mehr als 12 N/25mm beträgt.

5. Aufputz-Gehäuse nach einem der Ansprüche 1 bis 4, **dadurch gekennzeichnet, dass** die Vorrichtung zur Montageunterstützung (5) Bohrhilfen (7) aufweist, wobei die Bohrhilfen (7) verstärkt ausgebildet sind.

6. Aufputz-Gehäuse nach Anspruch 5, **dadurch gekennzeichnet, dass** die Bohrhilfen (7) an Ecken (9) des Rahmens (3) angeordnet sind.

7. Aufputz-Gehäuse nach einem der Ansprüche 1 bis 6, **dadurch gekennzeichnet, dass** die Vorrichtung zur Montageunterstützung (5) mindestens ein Gelenk (8) der Montageplatte umfasst.

8. Aufputz-Gehäuse nach einem der Ansprüche 1 bis 7, **dadurch gekennzeichnet, dass** die Montageplatte (4) und der Rahmen (3) als getrennte Bauteile ausgebildet sind.

9. Aufputz-Gehäuse nach einem der Ansprüche 1 bis 8, **dadurch gekennzeichnet, dass** die Montageplatte (4) mindestens einen Vorsprung (10) umfasst, wobei der Vorsprung (10) in einem Winkel von 90 ° zur Montageplatte angeordnet ist.

10. Verwendung einer Haftmasse (6) zur Montageunterstützung eines Aufputz-Gehäuses (1).
